# EUROPEAN PATENT SPECIFICATION

(11) **EP 4 372 694 B1**
(45) Date of publication and mention of the grant of the patent: **12.08.2026**
(21) Application number: 22841349.8
(22) Date of filing: 12.07.2022
(51) Int. Cl.: G06T 11/60, G06T 7/33, G06T 7/73

(54) **THREE-DIMENSIONAL DYNAMIC TRACKING METHOD AND APPARATUS, ELECTRONIC DEVICE AND STORAGE MEDIUM**
VERFAHREN UND VORRICHTUNG ZUR DREIDIMENSIONALEN DYNAMISCHEN VERFOLGUNG, ELEKTRONISCHE VORRICHTUNG UND SPEICHERMEDIUM
PROCÉDÉ ET APPAREIL DE SUIVI DYNAMIQUE EN TROIS DIMENSIONS, DISPOSITIF ÉLECTRONIQUE ET SUPPORT D'ENREGISTREMENT

(30) Priority: 12.07.2021 CN 202110784787
(43) Date of publication of application: 22.05.2024
(73) Proprietor: Shining 3D Tech Co., Ltd., Hangzhou, Zhejiang 311258 (CN)
(72) Inventor: HUA, Yunfeng, Hangzhou, Zhejiang 311258 (CN); TIAN, Yan, Hangzhou, Zhejiang 311258 (CN); JIANG, Tengfei, Hangzhou, Zhejiang 311258 (CN); XU, Weiwei, Hangzhou, Zhejiang 311258 (CN); DUAN, Ziheng, Hangzhou, Zhejiang 311258 (CN); TAO, Hongyu, Hangzhou, Zhejiang 311258 (CN)
(74) Representative: Novagraaf Group
(86) International application number: PCT/CN2022/105100
(87) International publication number: WO 2023/284713

(56) References cited:
- WO-A1-2020/156896
- CN-A- 110 200 710
- CN-A- 111 243 093
- CN-A- 111 243 093
- CN-A- 112 120 815
- CN-A- 113 516 781
- JP-A- 2014 190 800
- THIES JUSTUS ET AL: "Real-time expression transfer for facial reenactment", ACM TRANSACTIONS ON GRAPHICS, ACM, NY, US, vol. 34, no. 6, 26 October 2015 (2015-10-26), pages 1 - 14, XP058516074, ISSN: 0730-0301, DOI: 10.1145/2816795.2818056
- CAO CHEN ET AL: "FaceWarehouse: A 3D Facial Expression Database for Visual Computing", IEEE TRANSACTIONS ON VISUALIZATION AND COMPUTER GRAPHICS, IEEE, USA, vol. 20, no. 3, 1 March 2014 (2014-03-01), pages 413 - 425, XP011543570, ISSN: 1077-2626, [retrieved on 20140321], DOI: 10.1109/TVCG.2013.249
- NEWCOMBE R A ET AL: "KinectFusion: Real-time dense surface mapping and tracking", MIXED AND AUGMENTED REALITY (ISMAR), 2011 10TH IEEE INTERNATIONAL SYMPOSIUM ON, IEEE, 26 October 2011 (2011-10-26), pages 127 - 136, XP032104413, ISBN: 978-1-4577-2183-0, DOI: 10.1109/ISMAR.2011.6092378

## Description

### Technical Field

The present disclosure relates to the technical field of three-dimensional deformation, and in particular, to a method and apparatus for three-dimensional dynamic tracking, an electronic device, and a storage medium.

### Background

In the related art, the data acquisition technology and the three-dimensional reconstruction technology develop rapidly, thereby making it possible to digitize physical models with high precision. In the field of digitization in the dental industry, three-dimensional digital models of teeth and jaws can be obtained by means of scanning and 3D reconstruction, so that subsequent processing and customized production of dental products can be achieved. With the three-dimensional reconstruction technology, before orthodontic treatment, users can see, by means of three-dimensional tooth models, the effect of their teeth after being subjected to orthodontic treatment.

In the related art, 2D face + 2D teeth are usually adopted, i.e., the tooth model is manually adjusted on the basis of the captured 2D picture to obtain the orthodontically corrected teeth, or 2D face + 3D teeth are adopted, i.e., on the basis of the captured 2D picture, the 3D tooth model is projected to a corresponding tooth region on the picture. Because the lower jaw is less exposed in the 2D picture and the lower jaw can be tracked only when many teeth are kept being exposed, the tracking effect is poor. In addition, there is no face scale information when using the 2D technology for tooth tracking, and consequently, the visual effect is not good.

Thies Justus et al relates to "Real-time expression transfer for facial reenactment" published in ACM Transactions on Graphics, ACM, NY, US, vol. 34, no. 6, pages 1-14. Cao Chen et al relates to "FaceWarehouse: A 3D Facial Expression Database for visual computing" published in IEEE Transactions on Visualization and Computer Graphics, IEEE, USA, vol. 20, no. 3, pages 413-425. Newcombe R A et al relates to "KineticFusion: Real-time dense surface mapping and tracking" published in Mixed and Augmented Reality (ISMAR), 2011 IEEE International Symposium ON, IEEE, pages 127-136. CN 111 243 093 A relates to a method for generating a three-dimensional face mesh.

### Summary

### (I) Technical Problem To Be Solved

2D face + 2D teeth are usually adopted, i.e., the tooth model is manually adjusted on the basis of the captured 2D picture to obtain the orthodontically corrected teeth, or 2D face + 3D teeth are adopted, i.e., on the basis of the captured 2D picture, the 3D tooth model is projected to a corresponding tooth region on the picture.

Because the lower jaw is less exposed in the 2D picture and the lower jaw can be tracked only when many teeth are kept being exposed, the tracking effect is poor. In addition, there is no face scale information when using the 2D technology for tooth tracking, and consequently, the visual effect is not good.

### (II) Technical Solution

Various embodiments disclosed in the present disclosure provide a method and apparatus for three-dimensional dynamic tracking, an electronic device, and a storage medium.

A method for three-dimensional dynamic tracking according to the invention, includes:
acquiring face smile data, three-dimensional tooth data, and face template data, where the face smile data includes texture data and depth data;
registering the acquired face smile data, three-dimensional tooth data, and face template data to a preset coordinate system to obtain initial point cloud data, where the initial point cloud data includes initial depth point cloud data, initial texture data, initial three-dimensional tooth point cloud data, and initial face template point cloud data;
fusing the initial depth point cloud data to acquire a contour plane, and acquiring target depth point cloud data corresponding to the contour plane;
back-projecting the target depth point cloud data to initial texture data, and acquiring target texture data corresponding to the face smile data after back-projection;
optimizing, on the basis of the target depth point cloud data, the initial face template point cloud data to acquire target face template point cloud data, to realize tracking of face expression changes; and
fitting the target face template point cloud data and a tooth region identified by the initial texture data with the initial three-dimensional tooth data in a fitting region,
wherein, the registering the acquired face smile data, three-dimensional tooth data, and face template data to a preset coordinate system to obtain initial point cloud data includes:
   acquiring source point cloud data of the face smile data, the three-dimensional tooth data, and the face template data;
   determining a rotation parameter, a translation parameter, and an error threshold in an iterative closest point algorithm; and
   registering, on the basis of the rotation parameter, the translation parameter, and the error threshold, the source point cloud data to the preset coordinate system to obtain the initial point cloud data.

As an optional implementation of the embodiment of the present disclosure, the fusing the initial depth point cloud data to acquire a contour plane and acquiring target depth point cloud data corresponding the contour plane includes:
using a Truncated Signed Distance Function (TSDF) algorithm to acquire a TSDF value and a weight value corresponding to the initial depth point cloud data;
using, on the basis of the TSDF value and the weigh value, a marching cube algorithm to acquire the contour plane corresponding to the initial depth point cloud data; and
determining, on the basis of the point cloud data corresponding to the contour plane, the target depth point cloud data.

As an optional implementation of the embodiment of the present disclosure, the using a TSDF algorithm to acquire a TSDF value and a weight value corresponding to the initial depth point cloud data includes:
establishing a rectangular cuboid bounding box corresponding to the initial point cloud data;
voxelizing the rectangular cuboid bounding box corresponding to the initial point cloud data; and
using a TSDF algorithm to calculate a TSDF value and a weight value corresponding to the initial depth point cloud data in each voxelization.

As an optional implementation of the embodiment of the present disclosure, the using, on the basis of the TSDF value and the weigh value, a marching cube algorithm to acquire the contour plane corresponding to the initial depth point cloud data includes:
preprocessing the TSDF value and the weight value and reading the TSDF value and the weight value after preprocessing into a specific array;
acquiring position information of cell cubes corresponding to different voxelizations;
determining, on the basis of the position information of each of the cell cubes, a state table corresponding to each of the cell cubes;
acquiring, on the basis of the state table of each of the cell cubes, an edge of each of the cell cubes intersecting with the contour plane, and using a linear interpolation method to calculate position coordinates of an intersection of each of the cell cubes and the contour plane;
using a central difference method to acquire a normal vector of each vertex in each of the cell cubes, and using a linear interpolation method to obtain a normal vector of each vertex of a triangular patch; and
determining, on the basis of the position coordinates of the intersection of each of the cell cubes and the contour plane and the normal vector of the vertex, the contour plane.

As an optional implementation of the embodiment of the present disclosure, the back-projecting the target depth point cloud data to initial texture data, and acquiring target texture data corresponding to the face smile data after back-projection includes: $I \left(p\right) = \frac{{\sum }_{i = 0}^{n} {w}_{i} \left(p\right) ∗ {I}_{i} \left(p\right)}{{\sum }_{i = 0}^{n} {w}_{i} \left(p\right)}$ where: wᵢ(p) denotes a weight value of a point *p* projected to the viewing angle of an *i^{th}* camera, and Iᵢ(p) denotes a pixel value of the point *p* projected to the viewing angle of the *j^{th}* camera.

As an optional implementation of the embodiment of the present disclosure, the fitting the target face template point cloud data and a tooth region identified by the initial texture data with the initial three-dimensional tooth data in a fitting region includes:
using a Gauss-Newton method to fit the target face template point cloud data and the tooth region identified by the initial texture data with the initial three-dimensional tooth data in the fitting region.

In some embodiments of the present disclosure provide an apparatus for three-dimensional dynamic tracking, including:
a data acquisition component, configured to acquire face smile data, three-dimensional tooth data, and face template data, where the face smile data includes texture data and depth data;
an initial point cloud data acquisition component, configured to register the acquired face smile data, three-dimensional tooth data, and face template data to a preset coordinate system to obtain initial point cloud data, where the initial point cloud data includes initial depth point cloud data, initial texture data, initial three-dimensional tooth point cloud data, and initial face template point cloud data;
a target depth point cloud data acquisition component, configured to fuse the initial depth point cloud data to acquire a contour plane, and acquire target depth point cloud data corresponding to the contour plane;
a target texture data acquisition component, configured to back-project the target depth point cloud data to the initial texture data, and acquire target texture data corresponding to the face smile data after back-projection;
a face template tracking component, configured to optimize, on the basis of the target depth point cloud data, the initial face template point cloud data to acquire target face template point cloud data, to realize tracking of face expression changes; and
a three-dimensional tooth tracking component, configured to fit the target face template point cloud data and a tooth region identified by the initial texture data with the three-dimensional tooth data in a fitting region.

In some embodiments of the present disclosure provide an electronic device, including:
one or more processors; and
a storage apparatus, configured to store one or more programs,
the one or more programs, when executed by the one or more processors, enabling the one or more processors to implement the method for three-dimensional dynamic tracking of any of the above.

In some embodiments of the present disclosure provide a computer-readable storage medium, on which a computer program is stored, the program, when executed by a processor, implementing the method for three-dimensional dynamic tracking of any of the above.

Other features and advantages of the present disclosure will be set forth later in the specification and, in part, will become apparent from the specification or will be understood by implementing the present disclosure. The purposes and other advantages of the present disclosure are realized and obtained in the structure specifically indicated in the specification, the claims, and the accompanying drawings, and the details of one or more embodiments of the present disclosure are set forth in the accompanying drawings and description below.

In order to make the above objects, features, and advantages of the present disclosure more apparent and understandable, optional embodiments are hereinafter set forth with reference to the accompanying drawings and described in detail as follows.

### Brief Description of Figures

To describe the technical solutions in the embodiments of the present disclosure or in the prior art more clearly, the following briefly introduces the accompanying drawings for describing the embodiments or the prior art. Apparently, a person of ordinary skill in the art may still derive other drawings from the accompanying drawings without creative efforts.
FIG. 1 is a schematic flowchart of a method for three-dimensional dynamic tracking provided by some embodiments of the present disclosure;
FIG. 2 is a schematic flowchart of another method for three-dimensional dynamic tracking provided by some embodiments of the present disclosure;
FIG. 3 is a schematic flowchart of still another method for three-dimensional dynamic tracking provided by some embodiments of the present disclosure;
FIG. 4 is a flowchart of yet another method for three-dimensional dynamic tracking provided by some embodiments of the present disclosure;
FIG. 5 is a schematic structural diagram of an apparatus for three-dimensional dynamic tracking provided by some embodiments of the present disclosure; and
FIG. 6 is a schematic structural diagram of an electronic device provided by some embodiments of the present disclosure.

### Detailed Description of the Invention

To make the foregoing objectives, features, and advantages of the present disclosure clearer to understand, the following further describes the solution of the present disclosure in detail. It should be noted that embodiments of the present disclosure and features in the embodiments can be combined with each other in the case of no conflict.

Many specific details are set forth in the following description in order to facilitate a full understanding of the present disclosure, but the present disclosure may also be implemented in other ways different from those described herein. Obviously, the embodiments in the specification are only a part of the embodiments of the present disclosure, and not all of the embodiments.

Terms such as "first", "second", etc. in the specification and claims of the present disclosure are used to distinguish different objects and are not used to describe a specific sequence of the object.

In the embodiments of the present disclosure, the words such as "exemplary" or "for example" are used to indicate an example, illustration, or explanation. Any embodiment or design solution described as "exemplary" or "for example" in the embodiments of the present disclosure should not be construed as being preferred or advantageous over other embodiments or design solutions. Specifically, the use of the words such as "exemplary" or "for example" is intended to present the relevant concepts in a specific manner, and furthermore, in the description of embodiments of the present disclosure, unless otherwise indicated, the meaning of "multiple" is two or more than two.

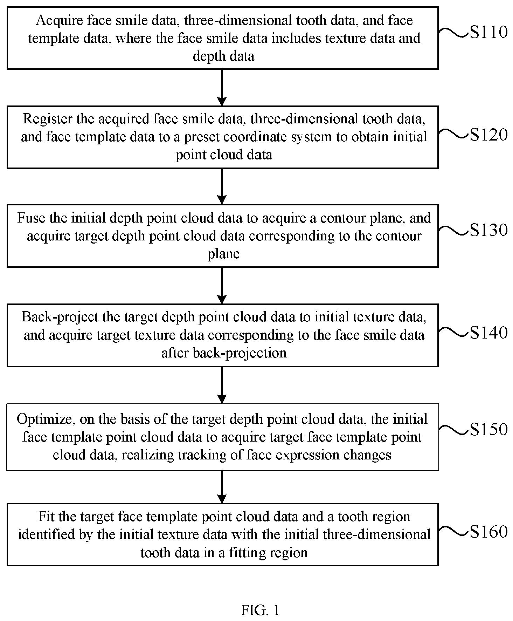

FIG. 1 is a schematic flowchart of a method for three-dimensional dynamic tracking provided by some embodiments of the present disclosure. The present embodiment may realize real-time tracking of 3D face + 3D teeth with simultaneous tracking of upper and lower jaws. The method of the present embodiment may be executed by an apparatus for three-dimensional dynamic tracking, and the apparatus may be realized by means of hardware/or software and may be configured in an electronic device. The method for three-dimensional dynamic tracking described in any embodiment of the present application may be realized.

The executive body of the method for three-dimensional dynamic tracking provided by the embodiment of the present disclosure may be an apparatus for three-dimensional dynamic tracking. The apparatus for three-dimensional dynamic tracking may be a terminal device such as a cell phone, a tablet computer, a laptop computer, an ultra-mobile personal computer (UMPC), a netbook, a personal digital assistant (PDA), a smart watch, and a smart bracelet. Alternatively, the terminal device may also be other types of terminal devices, and the embodiment of the present disclosure does not limit the types of the terminal devices.

In the related art, 2D face + 2D teeth are usually adopted, i.e., the tooth model is manually adjusted on the basis of the captured 2D picture to obtain the orthodontically corrected teeth, or 2D face + 3D teeth are adopted, i.e., on the basis of the captured 2D picture, the 3D tooth model is projected to a corresponding tooth region on the picture. Because the lower jaw is less exposed in the 2D picture and the lower jaw can be tracked only when many teeth are kept being exposed, the tracking effect is poor. In addition, there is no face scale information when using the 2D technology for tooth tracking, and consequently, the visual effect is not good. In order to ensure the accuracy of the 3D tooth model after being projected to a corresponding tooth region on the picture, an embodiment of the present disclosure provides a method for three-dimensional dynamic tracking.

As shown in FIG. 1, the method specifically includes the following steps:
S110: Acquire face smile data, three-dimensional tooth data, and face template data, where the face smile data includes texture data and depth data.

In some embodiments of the present disclosure, facial dynamic data include face smile data, the acquired face smile data includes texture data and depth data. The texture data refers to an RGB image, a variety of colors are obtained by varying red (R), green (G) and blue (B) color channels and superimposing them with each other, and RGB denotes colors that represent the red, green and blue channels. The depth data refers to a depth map, which is an image or image channel that contains information about the distance of the surface of a scene object at a point of view in 3D computer graphics. The depth map is similar to a grayscale image except that each of its pixel values refers to the actual distance from a sensor to an object. Typically the RGB image and the depth map are aligned and thus pixel points thereof have a one-to-one correspondence. The three-dimensional tooth data is data scanned with an intraoral scanner (the three-dimensional tooth data may also be designed data), and the face template data is face template data in a template database constructed using a Bilinear model.

S120: Register the acquired face smile data, three-dimensional tooth data, and face template data to a preset coordinate system to obtain initial point cloud data.

In some embodiments of the present disclosure, the initial point cloud data includes initial depth point cloud data, initial texture data, initial three-dimensional tooth point cloud data, and initial face template point cloud data.

The three-dimensional tooth data is acquired by scanning, the face smile data is obtained by Kinect shooting, and the face template data is acquired from the face template database. Therefore, the face smile data, the three-dimensional tooth data, and the face template data are point cloud data in different coordinate systems. In order to realize the dynamic tracking of the three-dimensional tooth data, it is generally necessary to register the acquired face smile data, three-dimensional tooth data, and face template data to the preset coordinate system to obtain the initial point cloud data, i.e., the acquired initial point cloud data is located in the same coordinate system.

S130: Fuse the initial depth point cloud data to acquire a contour plane, and acquire target depth point cloud data corresponding to the contour plane.

The contour plane is acquired by fusing the initial depth point cloud data, i.e., a smooth contour plane is acquired from the initial depth point cloud data, thereby ensuring a better visual effect. In some embodiments of the present disclosure, in the process of fusing the initial depth point cloud data to acquire the contour plane, a TSDF algorithm is first used to acquire a TSDF value and a weight value corresponding to the initial point cloud data, and on the basis of the acquired TSDF value corresponding to the initial point cloud data, a marching cube algorithm is used to acquire the contour plane corresponding to the initial depth point cloud data, so that the target depth point cloud data is determined on the basis of the contour plane.

S140: Back-project the target depth point cloud data to initial texture data, and acquire target texture data corresponding to the face smile data after back-projection.

After the target depth point cloud data is acquired, the target texture data corresponding to the face smile point cloud data after the back-projection is acquired by back-projecting the acquired target depth point cloud data to the initial texture data, i.e., the target texture data of the target point cloud data at different viewing angles is acquired, thereby ensuring that the acquired texture data of the face is more vivid.

In some embodiments of the present disclosure, the acquired target texture data I (p) is: $I \left(p\right) = \frac{{\sum }_{i = 0}^{n} {w}_{i} \left(p\right) ∗ {I}_{i} \left(p\right)}{{\sum }_{i = 0}^{n} {w}_{i} \left(p\right)}$ where: wᵢ(p) denotes a weight value of a point *p* projected to the viewing angle of an *j^{th}* camera, and Iᵢ(p) denotes a pixel value of the point *p* projected to the viewing angle of the *i^{th}* camera.

That is, the target texture data of the point *p* in the initial texture data is related to the pixel value and the weight value of the point *p* projected to the viewing angle of the *i^{th}* camera, and furthermore, after the weight value of the point *p* at the viewing angle of each camera is acquired, the acquired weight values need to be normalized.

S150: Optimize, on the basis of the target depth point cloud data, the initial face template point cloud data to acquire target face template point cloud data, to realize tracking of face expression changes.

In some embodiments of the present disclosure, face template data in the template database constructed by the Bilinear Model is used as the face template data. The face template data has 26,317 points, 52 expression parameters, and 938 personalized face parameters. Face template tracking is mainly to optimize, on the basis of the target depth point cloud data determined in step S130, the expression parameters in the template database constructed by the Bilinear Model, so that the target face template point cloud data is acquired, thereby realizing tracking of face expression changes.

S160: Fit the target face template point cloud data and a tooth region identified by the initial texture data with the initial three-dimensional tooth data in a fitting region.

Since the acquired face smile data dynamically changes, the positions of the tooth region in a current frame and the tooth region in a next frame change in real time in order to ensure that the tooth region and the face template data in the current frame are tracked in real time. For example, if it is necessary to track both the upper and lower jaws of the teeth in real time, it is first necessary to acquire the positions of feature points in the target face template point cloud data in previous and next frames, and to calculate the distance from the feature points of the previous frame to the plane where the feature points of the current frame are located. For example, when the upper jaw of the teeth is tracked, the nose is selected as the feature point. By acquiring the position coordinates of the nose feature point in the current frame, after the face smile dynamically changes, the position coordinates of the changed nose feature point in the next frame are acquired. According to the transformation of the acquired position coordinates of the nose feature point in different frames, the coordinate position of a maxillary line in the tooth region identified by the initial texture data is transformed to track the upper jaw in real time. When the lower jaw of the teeth is tracked, the chin is selected as the feature point. By acquiring the position coordinates of the chin feature point in the current frame, after the face smile dynamically changes, the position coordinates of the changed chin feature point in the next frame are acquired. According to the transformation of the acquired position coordinates of the chin feature point in different frames, the coordinate position of a mandibular line in the tooth region identified by the initial texture data is transformed to track the lower jaw in real time, thereby displaying the acquired three-dimensional tooth data in the fitting region.

According to the method for three-dimensional dynamic tracking provided by the embodiment of the present disclosure, by registering the acquired face smile data, three-dimensional tooth data, and face template data to the preset coordinate system to obtain the initial point cloud data, the initial depth point cloud data in the acquired initial point cloud data is fused to acquire the contour plane, and then the target depth point cloud data corresponding to the contour plane is acquired, ensuring a better visual effect of the face smile data. By back-projecting the acquired target depth point cloud data to the initial texture data, face texture is displayed. On the basis of the target depth point cloud data, the initial face template point cloud data is optimized to acquire target face template point cloud data, to realize tracking of face expression changes. Finally, the target face template point cloud data and the tooth region identified by the initial texture data are fitted and displayed, thereby realizing tooth tracking and improving the accuracy of the tracking results.

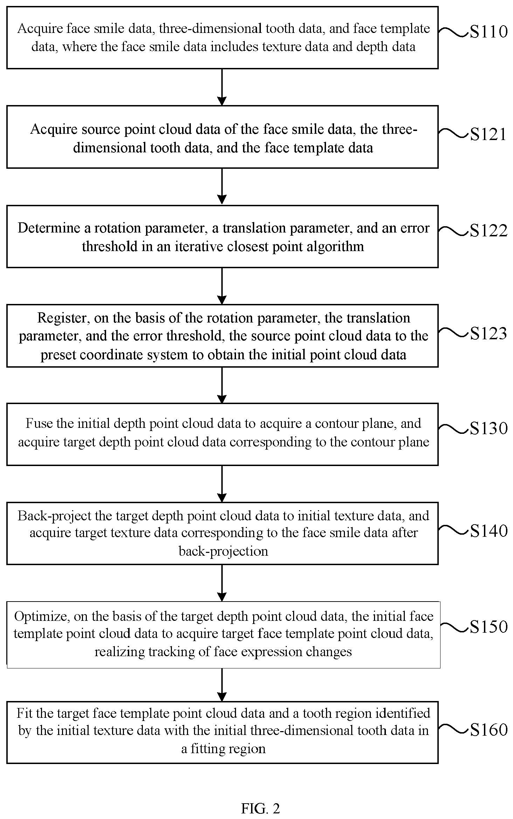

In some embodiments of the present disclosure, FIG. 2 is a schematic flowchart of another method for three-dimensional dynamic tracking provided by some embodiments of the present disclosure. As shown in FIG. 2, one implementation of step S120 includes the following steps:
S121: Acquire source point cloud data of the face smile data, the three-dimensional tooth data, and the face template data.

After the face smile data, the three-dimensional tooth data, and the face template data are acquired, the source point cloud data corresponding to the face smile data, the source point cloud data corresponding to the three-dimensional tooth data, and the source point cloud data corresponding to the face template data are acquired. Source point clouds corresponding to different data correspond to different point cloud ensembles. For example, source point cloud data *X* corresponding to the face smile data consists of a point cloud ensemble *xi,* source point cloud data *Y* corresponding to the three-dimensional tooth data consists of a point cloud ensemble *yi,* and source point cloud data *Z* corresponding to the face template data consists of a point cloud ensemble *zi.*

S122: Determine a rotation parameter, a translation parameter, and an error threshold in an iterative closest point algorithm.

After the source point cloud data corresponding to different data is determined, corresponding point cloud sets in the source point cloud are found. On the basis of the rotation parameter, the translation parameter, and the error threshold, the source point cloud data is registered to the preset coordinate system to obtain the initial point cloud data.

In some embodiments of the present disclosure, the Iterative Closest Point (ICP) algorithm aims to find a rotation parameter *R* and a translation parameter *T* between point cloud data to be aligned and reference point cloud data, so that optimal matching between the point cloud data to be aligned and the reference point cloud data satisfies the error threshold.

Assuming that the face smile data corresponds to the source point cloud data *X1,* then target point cloud data *X2* corresponds to the source point cloud data *X1,* and the alignment steps of the ICP method are as follows:
A corresponding close point of each point in *X2* in an *X1* point set is calculated; a rigid-body transformation that minimizes the average distance of the above corresponding point pairs is solved, and the translation parameter *T* and the rotation parameter *R* are solved; and the translation parameters and rotation parameters solved in the previous step are used for *X2* to obtain a new transformed point set, where if the new transformed point set and a reference point set satisfy that an average distance between the two point sets is less than the error threshold, iterative computation stops, otherwise the new transformed point set continues to be iterated as new *X2* until the requirement of an objective function is met.

Closest point pairs are searched for, where calculation of corresponding points is the most time-consuming step in the whole alignment process; closest points are searched for, and a k-d tree is used to improve the search speed; the topological relation of points established by a K-d tree method is partition of a coordinate axis on the basis of a binary tree; the process of constructing the k-d tree is performed on the basis of the law of a binary tree; first, a partition line is searched for according to the X-axis, i.e., the average value of x-values of all the points is calculated, and the space is divided into two parts on the basis of an x-value of the point closest to the average value; then a partition line is searched for in each partitioned sub-space on the basis of the Y-axis so as to divide each sub-space into two parts; and then the partitioned sub-space is partitioned according to the X-axis ... and so on until there is only one point in the partitioned region. The partition process corresponds to a binary tree, where a partial node of the binary tree corresponds to a partition line, and each leaf node of the binary tree corresponds to a point. In this way, the topological relation of points is established.

S123: Register, on the basis of the rotation parameter, the translation parameter, and the error threshold, the source point cloud data to the preset coordinate system to obtain the initial point cloud data.

If the source point cloud data *X1* corresponding to the face smile data includes point cloud *xi,* the point cloud *xi* is registered to the preset coordinate system after taking into account the rotation parameter, the translation parameter, and the error threshold to obtain an initial point cloud as xi'=Rxi+T.

According to the method for three-dimensional dynamic tracking provided by the embodiment of the present disclosure, the face smile data, the three-dimensional tooth data, and the face template data located in different coordinate systems are transferred to the preset coordinate system by means of a rigid registration algorithm, thereby obtaining the depth point cloud data, the initial texture data, the initial three-dimensional tooth point cloud data and the initial face template point cloud data in the preset coordinate system.

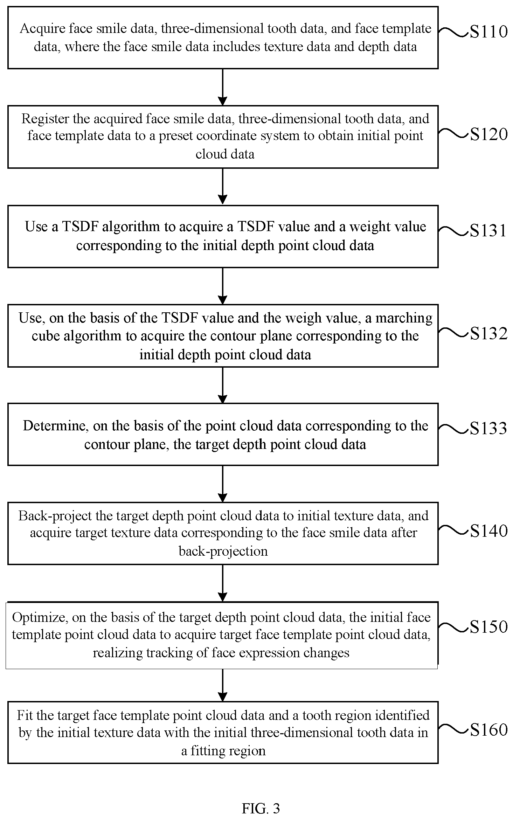

In some embodiments of the present disclosure, FIG. 3 is a schematic flowchart of still another method for three-dimensional dynamic tracking provided by some embodiments of the present disclosure. As shown in FIG. 3, one implementation of step S130 includes the following steps:
S131: Use a TSDF algorithm to acquire a TSDF value and a weight value corresponding to the initial depth point cloud data.

In some embodiments of the present disclosure, using a TSDF algorithm to acquire a TSDF value and a weight value corresponding to the initial depth point cloud data includes the following steps:
Establish a rectangular cuboid bounding box corresponding to the initial point cloud data.

Voxelize the rectangular cuboid bounding box corresponding to the initial point cloud data.

Use a TSDF algorithm to calculate a TSDF value and a weight value corresponding to the initial depth point cloud data in each voxelization.

Exemplarily, acquiring the TSDF value and the weight value corresponding to the initial depth point cloud data may include: first establishing a rectangular cuboid outer bounding box of the initial point cloud data as a cube space where the respective initial point cloud data is located, then voxelizing the rectangular cuboid bounding box corresponding to the initial point cloud data, and finally using the Truncated Signed Distance Function (TSDF) to calculate the TSDF value and the weight value corresponding to the initial depth point cloud data in the respective voxelization. In some embodiments of the present disclosure, all the voxels are traversed and a three-dimensional position point *p* of a voxel in a world coordinate system is taken as an example: according to a camera pose matrix of the depth data, a mapped point *v* of the point *p* in the world coordinate system in a camera coordinate system is solved. According to a camera internal reference matrix, the point v is back-projected to solve a corresponding pixel point *x* in the depth map, with the depth value of the pixel point *x* as value(x), and the distance of the point *v* to the origin of coordinates of a camera as distance(v). Then a sdf value corresponding to the point *p* is sdf(p) = value(x) - distance(v), TSDF(p) = sdf(p)/|ul, where |u| is a corresponding preset threshold, the preset threshold is related to the number and size of the voxels. The TSDF value corresponding to the point *p* is 1 if TSDF(p) > 1, and then the TSDF value corresponding to the point *p* is -1 if TSDF(p) < -1. The weight w(p) is calculated by the formula: w(p) = cos(θ), where θ is an angle between the projected ray of light and a surface normal vector.

S132: Use, on the basis of the TSDF value and the weigh value, a marching cube algorithm to acquire the contour plane corresponding to the initial depth point cloud data.

In some embodiments of the present disclosure, using, on the basis of the TSDF value and the weigh value, a marching cube algorithm to acquire the contour plane corresponding to the initial depth point cloud data includes the following steps:
Preprocess the TSDF value and the weight value and read the TSDF value and the weight value after preprocessing into a specific array.

Acquire position information of cell cubes corresponding to different voxelizations.

Determine, on the basis of the position information of each of the cell cubes, a state table corresponding to each of the cell cubes.

Acquire, on the basis of the state table of each of the cell cubes, an edge of each of the cell cubes intersecting with the contour plane, and use a linear interpolation method to calculate position coordinates of an intersection of each of the cell cubes and the contour plane.

Use a central difference method to acquire a normal vector of each vertex in each of the cell cubes, and use a linear interpolation method to obtain a normal vector of each vertex of a triangular patch.

Determine, on the basis of the position coordinates of the intersection of each of the cell cubes and the contour plane and the normal vector of the vertex, the contour plane.

The main idea of the marching cube algorithm is to approximate the contour plane by linear interpolation in a three-dimensional discrete data field, specifically as follows: each raster cell in the three-dimensional discrete data field is used as a voxel, and there is a corresponding scalar value at each vertex of the voxel. If the value on the vertex of a voxel is greater than or equal to the value of the contour plane, the vertex is defined to be outside the contour plane and labeled as "0". If the value on the vertex of a voxel is less than the value of the contour plane, the vertex is defined to be inside the contour plane and labeled as "1". Since each voxel cell has 8 vertices, there are 2^8 = 256 cases.

The indexing rules for the vertices and edges on each voxel cell are as follows: If the value of the vertex in a voxel is less than the value of the contour plane, a line intersecting with a voxel edge connected to the vertex forms the triangular patch, and the exact position of a vertex of the triangular patch needs to be calculated according to a linear interpolation method. Then a central difference method is used to acquire the normal vector of each vertex in each of the cell cubes, and a linear interpolation method is used to obtain the normal vector of each vertex of the triangular patch. Finally, on the basis of the position coordinates of the intersection of each of the cell cubes and the contour plane and the normal vector of the vertex, the contour plane is determined.

S133: Determine, on the basis of the point cloud data corresponding to the contour plane, the target depth point cloud data.

The target depth point cloud data is determined by the point cloud data corresponding to the acquired contour plane, i.e., the depth data corresponding to the face smile data of the current frame is determined, ensuring the smoothness of the depth data corresponding to the acquired three-dimensional face smile data.

According to the method for three-dimensional dynamic tracking provided by the embodiment of the present disclosure, the TSDF value and the weight value corresponding to the initial depth point cloud data are acquired by means of the TSDF algorithm, the marching cube algorithm is used to acquire the contour plane corresponding to the initial depth point cloud data, and then the corresponding target depth point cloud data is determined on the basis of the contour plane, ensuring that the face smile data has a better visual effect.

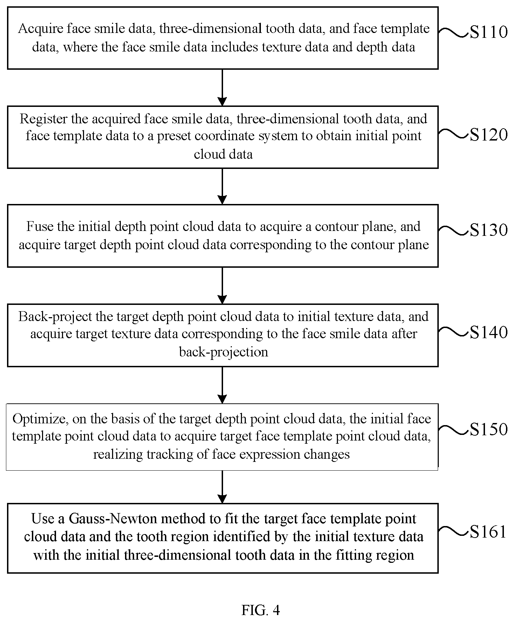

In some embodiments of the present disclosure, FIG. 4 is a schematic flowchart of yet another method for three-dimensional dynamic tracking provided by some embodiments of the present disclosure. As shown in FIG. 4, one implementation of step S160 includes the following step:
S161: Use a Gauss-Newton method to fit the target face template point cloud data and the tooth region identified by the initial texture data with the initial three-dimensional tooth data in the fitting region.

Since the acquired face smile data dynamically changes, the positions of the tooth region in a current frame and the tooth region in a next frame change in real time in order to ensure that the tooth region and the face template data in the current frame are tracked in real time. For example, if it is necessary to track both the upper and lower jaws of the teeth in real time, it is first necessary to acquire the positions of feature points in the target face template point cloud data in previous and next frames, and to calculate the distance from the feature points of the previous frame to the plane where the feature points of the current frame are located. For example, when the upper jaw of the teeth is tracked, the nose is selected as the feature point. By acquiring the position coordinates of the nose feature point in the current frame, after the face smile dynamically changes, the position coordinates of the changed nose feature point in the next frame are acquired. According to the transformation of the acquired position coordinates of the nose feature point in different frames, the coordinate position of a maxillary line in the tooth region identified by the initial texture data is transformed to track the upper jaw in real time. When the lower jaw of the teeth is tracked, the chin is selected as the feature point. By acquiring the position coordinates of the chin feature point in the current frame, after the face smile dynamically changes, the position coordinates of the changed chin feature point in the next frame are acquired. According to the transformation of the acquired position coordinates of the chin feature point in different frames, the coordinate position of a mandibular line in the tooth region identified by the initial texture data is transformed to track the lower jaw in real time, thereby displaying the acquired three-dimensional tooth data in the fitting region.

In some embodiments of the present disclosure, firstly, corresponding points of the nose in previous and next frames of a target face template are calculated, and the distance from the point of the previous frame to the plane where the corresponding point of the current frame is located is calculated. $Enose = {\sum }_{i = 0}^{n} {nd}_{i} ∗ \left({vs}_{i}-{vd}_{i}\right)$ vd denotes the coordinates of the point in the current frame, nd denotes the normal vector of the point in the current frame, and vs denotes the coordinates of the corresponding point in the previous frame.

On the basis of the maxillary edge of the tooth region identified by the initial texture data, the initial three-dimensional tooth data is then back-projected onto the initial texture data to fit the upper tooth edge. On the basis of the mandibular edge of the tooth region identified by the initial texture data, the initial three-dimensional tooth data is then back-projected onto the initial texture data to fit the lower tooth edge.

Tracking of the upper jaw: There are two energy terms. $E = Enose + Eedgematch$

Tracking of the lower jaw: There are two energy terms. $E = Echin + Eedgematch$

In the above energy items, $Eedgematch = {\sum }_{i = 0}^{n} {\left({xc}_{i}-ud\right)}^{∧} 2 + {\left({yc}_{i}-vd\right)}^{∧} 2$

ud denotes pixel coordinates of the tooth edge detected in the current frame, and vd denotes the pixel normal vector of the tooth edge detected in the current frame. $xc = Vc . x / Vc . z$ $yc = Vc . y / Vc . z$ $Vc = KRTVw$

Vw denotes the coordinate position in the world coordinate system, Vc denotes the coordinates in the camera coordinate system, and K and RT denote internal and external parameters of a camera, respectively.

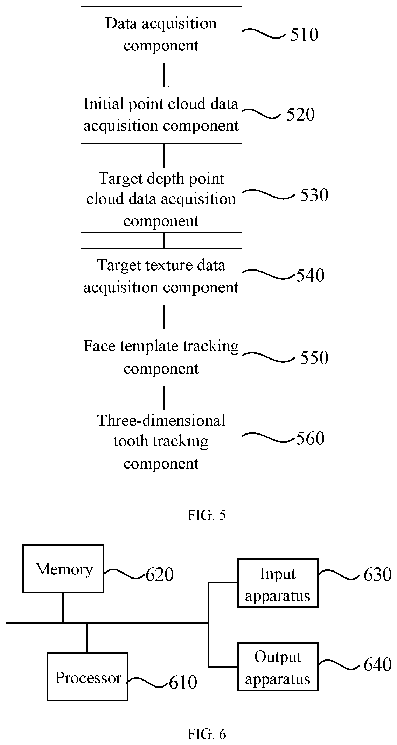

In some embodiments of the present disclosure, on the basis of the above embodiments, FIG. 5 shows an apparatus for three-dimensional dynamic tracking provided by some embodiments of the present disclosure. As shown in FIG. 5, the apparatus for three-dimensional dynamic tracking includes:
a data acquisition component 510, configured to acquire face smile data, three-dimensional tooth data, and face template data, where the face smile data includes texture data and depth data;
an initial point cloud data acquisition component 520, configured to register the acquired face smile data, three-dimensional tooth data, and face template data to a preset coordinate system to obtain initial point cloud data, where the initial point cloud data includes initial depth point cloud data, initial texture data, initial three-dimensional tooth point cloud data, and initial face template point cloud data;
a target depth point cloud data acquisition component 530, configured to fuse the initial depth point cloud data to acquire a contour plane, and acquire target depth point cloud data corresponding to the contour plane;
a target texture data acquisition component 540, configured to back-project the target depth point cloud data to the initial texture data, and acquire target texture data corresponding to the face smile data after back-projection;
a face template tracking component 550, configured to optimize, on the basis of the target depth point cloud data, the initial face template point cloud data to acquire target face template point cloud data, to realize tracking of face expression changes; and
a three-dimensional tooth tracking component 560, configured to fit the target face template point cloud data and a tooth region identified by the initial texture data with the initial three-dimensional tooth data in a fitting region.

According to the apparatus for three-dimensional dynamic tracking provided by the embodiment of the present disclosure, the face smile data, the three-dimensional tooth data, and the face template data acquired by the data acquisition component are registered to the preset coordinate system by the initial point cloud data acquisition component to obtain the initial point cloud data, the initial depth point cloud data in the acquired initial point cloud data is fused by the target depth point cloud data acquisition component to acquire the contour plane, and then the target depth point cloud data corresponding to the contour plane is acquired, ensuring a better visual effect of the face smile data. The acquired target depth point cloud data is back-projected to the initial texture data by the target texture data acquisition component, so that face texture is displayed. On the basis of the target depth point cloud data, the initial face template point cloud data is optimized by the face template tracking component to acquire target face template point cloud data, to realize tracking of face expression changes. Finally, the target face template point cloud data and the tooth region identified by the initial texture data are fitted by the three-dimensional tooth tracking component and the three-dimensional tooth data is displayed in the fitting region, thereby realizing tooth tracking and improving the accuracy of the tracking results.

FIG. 6 is a schematic structural diagram of an electronic device provided by some embodiments of the present disclosure. As shown in FIG. 6, the electronic device includes a processor 610, a memory 620, an input apparatus 630, and an output apparatus 640. The number of the processor 610 in the electronic device may be one or more, and one processor 610 is taken as an example in FIG. 6. The processor 610, the memory 620, the input apparatus 630, and the output apparatus 640 in the electronic device may be connected via a bus or in other ways, and connection via a bus is taken as an example in FIG. 6.

The memory 620, as a computer-readable storage medium, may be configured to store software programs, computer-executable programs, and components, such as program instructions/components corresponding to the method for three-dimensional dynamic tracking in the embodiments of the present disclosure. The processor 610 executes various functional applications of the electronic device and data processing by running the software programs, instructions, and components stored in the memory 620, i.e., realizing the method for three-dimensional dynamic tracking provided by the embodiment of the present disclosure.

The memory 620 may primarily include a program storage area and a data storage area. The program storage area may store an operating system and an application program required for at least one function. The data storage area may store data created on the basis of use of a terminal, and the like. In addition, the memory 620 may include a high speed random access memory, and may also include a non-volatile memory such as at least one magnetic disk storage device, a flash memory, or another non-volatile solid-state storage device. In some examples, the memory 620 may further include memories that are remotely set relative to the processor 610, and the remote memories may be connected to a computer device via a network. The examples of the above network include, but are not limited to, the Internet, the Intranet, local area networks, mobile communication networks, and combinations thereof.

The input apparatus 630 may be configured to receive input number or character information, and to generate inputs of key signals related to user settings of the electronic device as well as function control, for example, a keyboard, a mouse and the like may be included. The output apparatus 640 may include a display device such as a display screen.

An embodiment of the present disclosure further provides a storage medium comprising computer-executable instructions, the computer-executable instructions, when executed by a computer processor, being configured to implement the method for three-dimensional dynamic tracking provided by the embodiments of the present disclosure.

Certainly, a storage medium provided by an embodiment of the present disclosure includes computer-executable instructions, and the computer-executable instructions thereof are not limited to the operation of the method as described above, and can also perform the relevant operation in the method for three-dimensional dynamic tracking provided in any embodiment of the present disclosure.

According to the above descriptions about the implementations, a person skilled in the art may clearly learn that the present disclosure may be implemented by relying on software and essential common hardware, certainly, by using hardware, however, in many cases the former is the better way to implement the method. Based on such an understanding, the technical solutions of the present disclosure essentially, or the part contributing to the prior art, may be presented in the form of a software product. The computer software product may be stored in a computer-readable storage medium, such as a computer floppy disk, a Read-Only Memory (ROM), a Random Access Memory (RAM), a Flash, a hard disk or an optical disk, etc., and includes a number of instructions for causing a computer device (which may be a personal computer, a server, or a network device, etc.) to perform the method described in various embodiments of the present disclosure.

It is to be noted that the various units and components included in the above embodiment of the tracking apparatus are only divided in accordance with the functional logic, but are not limited to the above-described division, as long as the corresponding functions can be realized. Also, the specific names of the various functional units are only for the purpose of facilitating mutual differentiation, and are not used to limit the scope of protection of the present disclosure.

It should be noted that the "first", the "second" and other relational terms herein are used for distinguishing an entity or an operation from other entities and operations only, not necessarily to require or imply any actual relationship or sequence between the entities or the operations; and the terms, such as "comprise", "include" or any other variant, are intended to cover non-exclusive comprising, so that processes, methods, articles or devices containing a series of elements not only comprise the elements, but also comprise other elements which are not listed obviously, or comprise the inherent elements of the processes, the methods, the articles or the devices. The elements restrained by a statement "include a..." shall not exclude the condition that other same elements also exist in the processes, methods, articles or devices including the elements under the condition that no more restraints are required.

### Industrial Applicability

According to the method and apparatus for three-dimensional dynamic tracking, the electronic device, and the storage medium provided by the embodiments of the present disclosure, by registering the acquired face smile data, three-dimensional tooth data, and face template data to the preset coordinate system to obtain the initial point cloud data, the initial depth point cloud data in the acquired initial point cloud data is fused to acquire the contour plane, and then the target depth point cloud data corresponding to the contour plane is acquired, ensuring a better visual effect of the face smile data. By back-projecting the acquired target depth point cloud data to the initial texture data, face texture is displayed. On the basis of the target depth point cloud data, the initial face template point cloud data is optimized to acquire target face template point cloud data, to realize tracking of face expression changes; and finally, the target face template point cloud data and the tooth region identified by the initial texture data are fitted and displayed, thereby realizing tooth tracking and improving the accuracy of the tracking results.

## Claims

1. A method for three-dimensional dynamic tracking, comprising:
acquiring facial dynamic data, three-dimensional tooth data, and face template data, wherein the facial dynamic data comprises texture data and depth data;
registering the acquired facial dynamic data, the three-dimensional tooth data, and the face template data to a preset coordinate system to obtain initial point cloud data, wherein the initial point cloud data comprises initial depth point cloud data, initial texture data, initial three-dimensional tooth point cloud data, and initial face template point cloud data;
fusing the initial depth point cloud data to acquire a contour plane, and acquiring target depth point cloud data corresponding to the contour plane, wherein the contour plane is an iso-surface generated from the initial depth point cloud data;
back-projecting the target depth point cloud data to initial texture data, and acquiring target texture data corresponding to the facial dynamic data after back-projection;
optimizing, on the basis of the target depth point cloud data, the initial face template point cloud data to acquire target face template point cloud data, to realize tracking of face expression changes; and
fitting the target face template point cloud data and a tooth region identified by the initial texture data with the initial three-dimensional tooth data in a fitting region;
wherein the registering the acquired facial dynamic data, the three-dimensional tooth data, and the face template data to the preset coordinate system to obtain the initial point cloud data comprises:
acquiring source point cloud data of the facial dynamic data, the three-dimensional tooth data, and the face template data;
determining a rotation parameter, a translation parameter, and an error threshold in an iterative closest point algorithm; and
registering, on the basis of the rotation parameter, the translation parameter, and the error threshold, the source point cloud data to the preset coordinate system to obtain the initial point cloud data.

2. The method as claimed in claim 1, wherein alignment steps of the iterative closest point algorithm comprise:
calculating a corresponding close point of each point in target point cloud data corresponding to the source point cloud data corresponding to the facial dynamic data, and in the source point cloud data corresponding to the facial dynamic data;
solving a rigid-body transformation that minimizes an average distance of corresponding point pairs, and solving the translation parameter and the rotation parameter;
using the translation parameter and the rotation parameter solved in the previous step for the target point cloud data to obtain a new transformed point set;
in response to that the new transformed point set and a reference point set satisfy that an average distance between the new transformed point set and the reference point set is less than the error threshold, iterative computation stops, otherwise the new transformed point set continues to be iterated as new target point cloud data until requirement of an objective function is met.

3. The method as claimed in claim 1, wherein the fusing the initial depth point cloud data to acquire a contour plane and acquiring target depth point cloud data corresponding to the contour plane comprises:
using a Truncated Signed Distance Function (TSDF) algorithm to acquire a TSDF value and a weight value corresponding to the initial depth point cloud data;
using, on the basis of the TSDF value and the weigh value, a marching cube algorithm to acquire the contour plane corresponding to the initial depth point cloud data; and
determining, on the basis of the point cloud data corresponding to the contour plane, the target depth point cloud data.

4. The method as claimed in claim 3, wherein the using the TSDF algorithm to acquire the TSDF value and the weight value corresponding to the initial depth point cloud data comprises:
establishing a rectangular cuboid bounding box corresponding to the initial point cloud data;
voxelizing the rectangular cuboid bounding box corresponding to the initial point cloud data; and
using the TSDF algorithm to calculate the TSDF value and the weight value corresponding to the initial depth point cloud data in each voxelization.

5. The method as claimed in claim 4, wherein the TSDF value is determined by the following formula: $TSDF \left(p\right) = sdf \left(p\right) / \left|u\right|$ wherein: TSDF(p) denotes the TSDF value of point p, |u| is a corresponding preset threshold, the preset threshold is related to a number and size of voxels, a sdf value corresponding to point p is sdf(p) = value(x) - distance(v), value(x) is a depth value of pixel point x, distance(v) is a distance of point v to an origin of coordinates of a camera, the point v is a mapping point of the point p in a world coordinate system to a camera coordinate system, the pixel point x in a depth map is determined by a camera internal reference matrix and the point v of back-projection.

6. The method as claimed in claim 5, wherein the TSDF value corresponding to the point p is 1 in response to TSDF(p) > 1, and the TSDF value corresponding to the point p is -1 in response to TSDF(p) < -1.

7. The method as claimed in claim 4, wherein the weight value is determined by the following formula: $w \left(p\right) = cos \left(θ\right)$ wherein θ is an angle between a projected ray of light and a surface normal vector, w(p) denotes the weight value of point p.

8. The method as claimed in claim 4, wherein the using, on the basis of the TSDF value and
the weight value, the marching cube algorithm to acquire the contour plane corresponding to the initial depth point cloud data comprises:
preprocessing the TSDF value and the weight value and reading the TSDF value and the weight value after preprocessing into a specific array;
acquiring position information of cell cubes corresponding to different voxelizations; determining, on the basis of the position information of each of the cell cubes, a state table corresponding to each of the cell cubes;
acquiring, on the basis of the state table of each of the cell cubes, an edge of each of the cell cubes intersecting with the contour plane, and using a linear interpolation method to calculate position coordinates of an intersection of each of the cell cubes and the contour plane;
using a central difference method to acquire a normal vector of each vertex in each of the cell cubes, and using a linear interpolation method to obtain a normal vector of each vertex of a triangular patch; and
determining, on the basis of the position coordinates of the intersection of each of the cell cubes and the contour plane and the normal vector of the vertex, the contour plane.

9. The method as claimed in claim 3, wherein the back-projecting the target depth point cloud data to the initial texture data, and acquiring the target texture data corresponding to the facial dynamic data after back-projection comprises: the target texture data is determined by the following formula: $I \left(p\right) = \frac{{\sum }_{i = 0}^{n} {w}_{i} \left(p\right) ∗ {I}_{i} \left(p\right)}{{\sum }_{i = 0}^{n} {w}_{i} \left(p\right)}$ wherein: wᵢ(p) denotes a weight value of a point *p* projected to a viewing angle of an *i^{th}* camera, and Iᵢ(p) denotes a pixel value of the point p projected to the viewing angle of the *i^{th}* camera, and I(p) denotes the target texture data.

10. The method as claimed in claim 1, wherein the fitting the target face template point cloud data and the tooth region identified by the initial texture data with the initial three-dimensional tooth data in the fitting region comprises:
using a Gauss-Newton method to fit the target face template point cloud data and the tooth region identified by the initial texture data with the initial three-dimensional tooth data in the fitting region.

11. An electronic device, comprising:
one or more processors; and
a storage apparatus, configured to store one or more programs,
the one or more programs, when executed by the one or more processors, enabling the one or more processors to implement the method for three-dimensional dynamic tracking as claimed in any one of claims 1-10.

12. The electronic device as claimed in claim 11, the one or more processors are further configured to:
acquire source point cloud data of the facial dynamic data, the three-dimensional tooth data, and the face template data;
determine a rotation parameter, a translation parameter, and an error threshold in an iterative closest point algorithm; and
register, on the basis of the rotation parameter, the translation parameter, and the error threshold, the source point cloud data to the preset coordinate system to obtain the initial point cloud data.

13. The electronic device as claimed in claim 11, the one or more processors are further configured to:
use a Truncated Signed Distance Function (TSDF) algorithm to acquire a TSDF value and a weight value corresponding to the initial depth point cloud data;
use, on the basis of the TSDF value and the weigh value, a marching cube algorithm to acquire the contour plane corresponding to the initial depth point cloud data; and
determine, on the basis of the point cloud data corresponding to the contour plane, the target depth point cloud data.

14. The electronic device as claimed in claim 13, the one or more processors are further configured to:
establish a rectangular cuboid bounding box corresponding to the initial point cloud data;
voxelize the rectangular cuboid bounding box corresponding to the initial point cloud data; and
use the TSDF algorithm to calculate the TSDF value and the weight value corresponding to the initial depth point cloud data in each voxelization.

## Patentansprüche

1. Verfahren für eine dreidimensionale dynamische Verfolgung, umfassend:
Erfassen von dynamischen Gesichtsdaten, dreidimensionalen Zahndaten und Gesichtsvorlagendaten, wobei die dynamischen Gesichtsdaten Texturdaten und Tiefendaten umfassen;
Registrieren der erfassten dynamischen Gesichtsdaten, der dreidimensionalen Zahndaten und der Gesichtsvorlagendaten auf ein voreingestelltes Koordinatensystem, um anfängliche Punktwolkendaten zu erhalten, wobei die anfänglichen Punktwolkendaten anfängliche Tiefenpunktwolkendaten, anfängliche Texturdaten, anfängliche dreidimensionale Zahnpunktwolkendaten und anfängliche Gesichtsvorlagen-Punktwolkendaten umfassen;
Fusionieren der anfänglichen Tiefenpunktwolkendaten, um eine Konturebene zu erfassen, und Erfassen von Zieltiefenpunktwolkendaten, die der Konturebene entsprechen, wobei die Konturebene eine Isooberfläche ist, die aus den anfänglichen Tiefenpunktwolkendaten erzeugt wird;
Rückprojizieren der Zieltiefenpunktwolkendaten auf anfängliche Texturdaten und Erfassen von Zieltexturdaten, die den dynamischen Gesichtsdaten nach der Rückprojektion entsprechen;
Optimieren der anfänglichen Gesichtsvorlagenpunktwolkendaten auf der Basis der Zieltiefenpunktwolkendaten, um Ziel-Gesichtsvorlagenpunktwolkendaten zu erhalten, um das Verfolgen von Gesichtsausdrucksänderungen zu realisieren; und
Anpassen der Zielgesichtsvorlagenpunktwolkendaten und eines durch die anfänglichen Texturdaten identifizierten Zahnbereichs an die anfänglichen dreidimensionalen Zahndaten in einem Anpassungsbereich;
wobei das Registrieren der erfassten dynamischen Gesichtsdaten, der dreidimensionalen Zahndaten und der Gesichtsvorlagendaten auf das voreingestellte Koordinatensystem, um die anfänglichen Punktwolkendaten zu erhalten, umfasst:
Erfassen von Quellpunktwolkendaten der dynamischen Gesichtsdaten, der dreidimensionalen Zahndaten und der Gesichtsvorlagendaten;
Bestimmen eines Rotationsparameters, eines Translationsparameters und eines Fehlerschwellenwerts in einem Iterative-Closest-Point-Algorithmus; und
Registrieren, auf der Basis des Rotationsparameters, des Translationsparameters und des Fehlerschwellenwerts, der Quellpunktwolkendaten auf das voreingestellte Koordinatensystem, um die anfänglichen Punktwolkendaten zu erhalten.

2. Verfahren nach Anspruch 1, wobei Ausrichtungsschritte des Iterative-Closest-Point-Algorithmus umfassen:
Berechnen eines entsprechenden nahen Punktes jedes Punktes in Zielpunktwolkendaten, die den Quellpunktwolkendaten entsprechen, die den dynamischen Gesichtsdaten entsprechen, und in den Quellpunktwolkendaten, die den dynamischen Gesichtsdaten entsprechen;
Lösen einer Starrkörpertransformation, die einen durchschnittlichen Abstand entsprechender Punktpaare minimiert, und Lösen des Translationsparameters und des Rotationsparameters;
Verwenden des Translationsparameters und des Rotationsparameters, die in dem vorherigen Schritt gelöst werden, für die Zielpunktwolkendaten, um eine neue transformierte Punktmenge zu erhalten;
als Reaktion darauf, dass die neue transformierte Punktmenge und eine Referenzpunktmenge erfüllen, dass ein durchschnittlicher Abstand zwischen der neuen transformierten Punktmenge und der Referenzpunktmenge kleiner als der Fehlerschwellenwert ist, die iterative Berechnung stoppt, andernfalls die neue transformierte Punktmenge weiterhin als neue Zielpunktwolkendaten iteriert wird, bis die Anforderung einer Zielfunktion erfüllt ist.

3. Verfahren nach Anspruch 1, wobei das Fusionieren der anfänglichen Tiefenpunktwolkendaten, um eine Konturebene zu erfassen, und das Erfassen von Zieltiefenpunktwolkendaten, die der Konturebene entsprechen, umfasst:
Verwenden eines Algorithmus einer trunkierten vorzeichenbehafteten Distanzfunktion (TSDF), um einen TSDF-Wert und einen Gewichtswert zu erfassen, die den anfänglichen Tiefenpunktwolkendaten entsprechen;
Verwenden, auf der Basis des TSDF-Werts und des Gewichtswerts, eines Marching-Cubes-Algorithmus, um die Konturebene zu erfassen, die den anfänglichen Tiefenpunktwolkendaten entspricht; und
Bestimmen, auf der Basis der Punktwolkendaten, die der Konturebene entsprechen, der Zieltiefenpunktwolkendaten.

4. Verfahren nach Anspruch 3, wobei das Verwenden des TSDF-Algorithmus, um den TSDF-Wert und den Gewichtswert zu erfassen, die den anfänglichen Tiefenpunktwolkendaten entsprechen, umfasst:
Festlegen eines rechteckigen quaderförmigen Begrenzungsrahmens, der den anfänglichen Punktwolkendaten entspricht;
Voxelieren der rechteckigen quaderförmigen Begrenzungsbox, die den anfänglichen Punktwolkendaten entspricht; und
Verwenden des TSDF-Algorithmus, um den TSDF-Wert und den Gewichtungswert zu berechnen, die den anfänglichen Tiefenpunktwolkendaten in jeder Voxelierung entsprechen.

5. Verfahren nach Anspruch 4, wobei der TSDF-Wert durch die folgende Formel bestimmt wird: $TSDF \left(p\right) = sdf \left(p\right) / \left|u\right|$ wobei: TSDF(p) den TSDF-Wert des Punktes p bezeichnet, |u| ein entsprechender voreingestellter Schwellenwert ist, der voreingestellte Schwellenwert in Beziehung zu einer Anzahl und Größe von Voxeln steht, ein sdf-Wert, der dem Punkt p entspricht, sdf(p) = Wert(x) - Abstand(v) ist, Wert(x) ein Tiefenwert des Pixelpunktes x ist, Abstand(v) ein Abstand des Punktes v zu einem Koordinatenursprung einer Kamera ist, der Punkt v ein Abbildungspunkt des Punktes p in einem Weltkoordinatensystem auf ein Kamerakoordinatensystem ist, der Pixelpunkt x in einer Tiefenkarte durch eine interne Referenzmatrix der Kamera und den Punkt v der Rückprojektion bestimmt wird.

6. Verfahren nach Anspruch 5, wobei der TSDF-Wert, der dem Punkt p entspricht, als Reaktion auf TSDF(p) > 1 1 ist, und der TSDF-Wert, der dem Punkt p entspricht, als Reaktion auf TSDF(p) < -1 -1 ist.

7. Verfahren nach Anspruch 4, wobei der Gewichtswert durch die folgende Formel bestimmt wird: $w \left(p\right) = cos \left(θ\right)$ wobei θ ein Winkel zwischen einem projizierten Lichtstrahl und einem Normalenvektor der Oberfläche ist, w(p) den Gewichtswert des Punktes p bezeichnet.

8. Verfahren nach Anspruch 4, wobei das Verwenden, auf der Basis des TSDF-Werts und des Gewichtswerts, des Marching-Cube-Algorithmus, um die Konturebene zu erfassen, die den anfänglichen Tiefenpunktwolkendaten entspricht, umfasst:
Vorverarbeiten des TSDF-Wertes und des Gewichtswertes und Einlesen des TSDF-Wertes und des Gewichtswertes nach der Vorverarbeitung in ein spezifisches Array;
Erfassen von Positionsinformationen von Zellwürfeln, die unterschiedlichen Voxelisationen entsprechen;
Bestimmen, auf der Basis der Positionsinformationen jedes der Zellwürfel, einer Zustandstabelle, die jedem der Zellwürfel entspricht;
Erfassen, auf der Basis der Zustandstabelle jedes der Zellwürfel, einer Kante jedes der Zellwürfel, die die Konturebene schneidet, und Verwenden eines linearen Interpolationsverfahrens, um Positionskoordinaten eines Schnittpunkts jedes der Zellwürfel und der Konturebene zu berechnen;
Verwenden eines zentralen Differenzenverfahrens, um einen Normalenvektor jedes Eckpunkts in jedem der Zellwürfel zu erfassen, und Verwenden eines linearen Interpolationsverfahrens, um einen Normalenvektor jedes Eckpunkts eines dreieckigen Flächenelements zu erhalten; und
Bestimmen der Konturebene auf der Basis der Positionskoordinaten des Schnittpunkts jedes der Zellwürfel und der Konturebene und des Normalenvektors des Eckpunkts.

9. Verfahren nach Anspruch 3, wobei das Rückprojizieren der Zieltiefenpunktwolkendaten auf die anfänglichen Texturdaten und das Erfassen der Zieltexturdaten, die den dynamischen Gesichtsdaten nach der Rückprojektion entsprechen, umfasst: die Zieltexturdaten werden durch die folgende Formel bestimmt: $I \left(p\right) = \frac{{\sum }_{i = 0}^{n} {w}_{i} \left(p\right) ∗ {I}_{i} \left(p\right)}{{\sum }_{i = 0}^{n} {w}_{i} \left(p\right)}$ wobei: wᵢ(p) einen Gewichtswert eines Punktes *p* bezeichnet, der auf einen Betrachtungswinkel einer *i-ten* Kamera projiziert wird, und Iᵢ(p) einen Pixelwert des Punktes *p* bezeichnet, der auf den Betrachtungswinkel der *i-ten* Kamera projiziert wird, und I(p) die Zieltexturdaten bezeichnet.

10. Verfahren nach Anspruch 1, wobei das Anpassen der Zielgesichtsvorlagenpunktwolkendaten und der Zahnregion, die durch die anfänglichen Texturdaten identifiziert wird, mit den anfänglichen dreidimensionalen Zahndaten in der Anpassungsregion umfasst:
Verwenden eines Gauss-Newton-Verfahrens, um die Zielgesichtsvorlagenpunktwolkendaten und den Zahnbereich, der durch die anfänglichen Texturdaten identifiziert wird, an die anfänglichen dreidimensionalen Zahndaten in dem Anpassungsbereich anzupassen.

11. Elektronische Vorrichtung, umfassend:
einen oder mehrere Prozessoren; und
eine Speicherungsvorrichtung, die konfiguriert ist, um ein oder mehrere Programme zu speichern,
das eine oder die mehreren Programme, die, wenn sie durch den einen oder die mehreren Prozessoren ausgeführt werden, es dem einen oder den mehreren Prozessoren ermöglichen, das Verfahren für die dreidimensionale dynamische Verfolgung nach einem der Ansprüche 1 bis 10 zu implementieren.

12. Elektronische Vorrichtung nach Anspruch 11, wobei der eine oder die mehreren Prozessoren ferner konfiguriert sind zum:
Erfassen von Quellpunktwolkendaten der dynamischen Gesichtsdaten, der dreidimensionalen Zahndaten und der Gesichtsvorlagendaten;
Bestimmen eines Rotationsparameters, eines Translationsparameters und eines Fehlerschwellenwerts in einem Iterative-Closest-Point-Algorithmus; und
Registrieren, auf der Basis des Rotationsparameters, des Translationsparameters und des Fehlerschwellenwerts, der Quellpunktwolkendaten auf das voreingestellte Koordinatensystem, um die anfänglichen Punktwolkendaten zu erhalten.

13. Elektronische Vorrichtung nach Anspruch 11, wobei der eine oder die mehreren Prozessoren ferner konfiguriert sind zum:
Verwenden eines Algorithmus einer trunkierten vorzeichenbehafteten Distanzfunktion (TSDF), um einen TSDF-Wert und einen Gewichtswert zu erfassen, die den anfänglichen Tiefenpunktwolkendaten entsprechen;
Verwenden, auf der Basis des TSDF-Werts und des Gewichtswerts, eines Marching-Cubes-Algorithmus, um die Konturebene zu erfassen, die den anfänglichen Tiefenpunktwolkendaten entspricht; und
Bestimmen, auf der Basis der Punktwolkendaten, die der Konturebene entsprechen, der Zieltiefenpunktwolkendaten.

14. Elektronische Vorrichtung nach Anspruch 13, wobei der eine oder die mehreren Prozessoren ferner konfiguriert sind zum:
Festlegen eines rechteckigen quaderförmigen Begrenzungsrahmens, der den anfänglichen Punktwolkendaten entspricht;
Voxelieren der rechteckigen quaderförmigen Begrenzungsbox, die den anfänglichen Punktwolkendaten entspricht; und
Verwenden des TSDF-Algorithmus, um den TSDF-Wert und den Gewichtungswert zu berechnen, die den anfänglichen Tiefenpunktwolkendaten in jeder Voxelierung entsprechen.

## Revendications

1. Procédé de suivi dynamique tridimensionnel, comprenant :
l'acquisition de données dynamiques faciales, de données dentaires tridimensionnelles et de données de modèle facial, dans lequel les données dynamiques faciales comprennent des données de texture et des données de profondeur ;
l'enregistrement des données dynamiques faciales acquises, des données dentaires tridimensionnelles et des données de modèle facial dans un système de coordonnées prédéfini pour obtenir des données de nuage de points initiales, dans lequel les données de nuage de points initiales comprennent des données de nuage de points de profondeur initiales, des données de texture initiales, des données de nuage de points de dent tridimensionnel initiales et des données de nuage de points de modèle facial initiales ;
la fusion des données de nuage de points de profondeur initiales pour acquérir un plan de contour, et l'acquisition de données de nuage de points de profondeur cibles correspondant au plan de contour, dans lequel le plan de contour est une iso-surface générée à partir des données de nuage de points de profondeur initial ;
la rétroprojection des données de nuage de points de profondeur cibles sur les données de texture initiales, et l'acquisition de données de texture cibles correspondant aux données dynamiques faciales après rétroprojection ;
l'optimisation, sur la base des données de nuage de points de profondeur cibles, des données de nuage de points de modèle facial initiales pour acquérir des données de nuage de points de modèle facial cibles, afin de réaliser un suivi des changements d'expression faciale ; et
l'ajustement des données de nuage de points de modèle facial cibles et d'une région de dent identifiée par les données de texture initiales avec les données de dent tridimensionnelles initiales dans une région d'ajustement ;
dans lequel l'enregistrement des données dynamiques faciales acquises, des données dentaires tridimensionnelles et des données de modèle facial dans le système de coordonnées prédéfini pour obtenir les données de nuage de points initiales comprend :
l'acquisition de données de nuage de points sources des données dynamiques faciales, des données dentaires tridimensionnelles et des données de modèle facial ;
la détermination d'un paramètre de rotation, d'un paramètre de translation et d'un seuil d'erreur dans un algorithme itératif de point le plus proche ; et
l'enregistrement, sur la base du paramètre de rotation, du paramètre de translation et du seuil d'erreur, des données de nuage de points sources dans le système de coordonnées prédéfini pour obtenir les données de nuage de points initiales.

2. Procédé selon la revendication 1, dans lequel des étapes d'alignement de l'algorithme itératif de point le plus proche comprennent :
le calcul d'un point de fermeture correspondant de chaque point dans les données de nuage de points cibles correspondant aux données de nuage de points sources correspondant aux données dynamiques faciales, et dans les données de nuage de points sources correspondant aux données dynamiques faciales ;
la résolution d'une transformation de corps rigide qui minimise une distance moyenne de paires de points correspondantes, et la résolution du paramètre de translation et du paramètre de rotation ;
l'utilisation du paramètre de translation et du paramètre de rotation résolus à l'étape pour les données de nuage de points cibles afin d'obtenir un nouvel ensemble de points transformé ;
en réponse au fait que le nouvel ensemble de points transformé et un ensemble de points de référence satisfont au fait qu'une distance moyenne entre le nouvel ensemble de points transformés et l'ensemble de points de référence est inférieure au seuil d'erreur, le calcul itératif s'arrête, sinon le nouvel ensemble de points transformé continue d'être itéré en tant que nouvelles données de nuage de points cibles jusqu'à ce que l'exigence d'une fonction objective soit satisfaite.

3. Procédé selon la revendication 1, dans lequel la fusion des données de nuage de points de profondeur initiales pour acquérir un plan de contour et l'acquisition de données de nuage de points de profondeur cibles correspondant au plan de contour comprend :
l'utilisation d'un algorithme de fonction de distance signée tronquée (TSDF) pour acquérir une valeur TSDF et une valeur de pondération correspondant aux données de nuage de points de profondeur initiales ;
l'utilisation, sur la base de la valeur TSDF et de la valeur de pesée, d'un algorithme de cubes en marche pour acquérir le plan de contour correspondant aux données de nuage de points de profondeur initiales ; et
la détermination, sur la base des données de nuage de points correspondant au plan de contour, des données de nuage de points de profondeur cible.

4. Procédé selon la revendication 3, dans lequel l'utilisation de l'algorithme TSDF pour acquérir la valeur TSDF et la valeur de pondération correspondant aux données de nuage de points de profondeur initiales comprend :
l'établissement d'une zone de délimitation cubique rectangulaire correspondant aux données de nuage de points initiales ;
la voxelisation de la zone de délimitation cubique rectangulaire correspondant aux données de nuage de points initiales ; et
l'utilisation de l'algorithme TSDF pour calculer la valeur TSDF et la valeur de pondération correspondant aux données de nuage de points de profondeur initiales dans chaque voxelisation.

5. Procédé selon la revendication 4, dans lequel la valeur TSDF est déterminée par la formule suivante : $TSDF \left(p\right) = sdf \left(p\right) / \left|u\right|$ dans laquelle : TSDF(p) désigne la valeur TSDF du point p, |u| est un seuil prédéfini correspondant, le seuil prédéfini est lié à un nombre et à une taille de voxels, une valeur SDF correspondant au point p est sdf(p) = valeur(x) - distance(v), valeur(x) est une valeur de profondeur du point pixel x, distance(v) est une distance du point v à une origine des coordonnées d'une caméra, le point v est un point de cartographie du point p dans un système de coordonnées mondiales avec un système de coordonnées de caméra, le point pixel x dans une carte de profondeur est déterminé par une matrice de référence interne de caméra et le point v de rétroprojection.

6. Procédé selon la revendication 5, dans lequel la valeur TSDF correspondant au point p est 1 en réponse à TSDF(p) > 1, et la valeur TSDF correspondant au point p est -1 en réponse à TSDF(p) < -1.

7. Procédé selon la revendication 4, dans lequel la valeur de pondération est déterminée par la formule suivante : $w \left(p\right) = cos \left(θ\right)$ dans lequel θ est un angle entre un rayon de lumière projeté et un vecteur normal de surface, w(p) désigne la valeur de pondération du point p.

8. Procédé selon la revendication 4, dans lequel l'utilisation, sur la base de la valeur TSDF et de la valeur de pondération, de l'algorithme de cubes en marche pour acquérir le plan de contour correspondant aux données de nuage de points de profondeur initiales comprend :
le prétraitement de la valeur TSDF et de la valeur de pondération, et la lecture de la valeur TSDF et de la valeur de pondération après prétraitement dans un réseau spécifique ;
l'acquisition d'informations de position de cubes de cellule correspondant à différentes voxelisations ;
la détermination, en fonction des informations de position de chacun des cubes de cellule, d'une table d'états correspondant à chacun des cubes de cellule ;
l'acquisition, sur la base de la table d'états de chacun des cubes de cellule, d'un bord de chacun des cubes de cellule coupant le plan de contour, et l'utilisation d'un procédé d'interpolation linéaire pour calculer les coordonnées de position d'une intersection de chacun des cubes de cellule et du plan de contour ;
l'utilisation d'un procédé de différence centrale pour acquérir un vecteur normal de chaque sommet dans chacun des cubes de cellule, et l'utilisation d'un procédé d'interpolation linéaire pour obtenir un vecteur normal de chaque sommet d'une plaque triangulaire ; et
la détermination, sur la base des coordonnées de position de l'intersection de chacun des cubes de cellule et du plan de contour et du vecteur normal du sommet, du plan de contour.

9. Procédé selon la revendication 3, dans lequel la rétroprojection des données de nuage de points de profondeur cibles sur les données de texture initiales, et l'acquisition des données de texture cibles correspondant aux données dynamiques faciales après rétroprojection comprennent : les données de texture cibles sont déterminées par la formule suivante : $I \left(p\right) = \frac{{\sum }_{i = 0}^{n} {w}_{i} \left(p\right) ∗ {I}_{i} \left(p\right)}{{\sum }_{i = 0}^{n} {w}_{i} \left(p\right)}$ dans lequel : wᵢ(p) désigne une valeur de pondération d'un point *p* projeté sur un angle de vue d'une *i^{ème}* caméra, et Iᵢ(p) désigne une valeur de pixel du point *p* projeté sur l'angle de vue de la *i^{ème}* caméra, et I(p) désigne les données de texture cibles.

10. Procédé selon la revendication 1, dans lequel l'ajustement des données de nuage de points de modèle facial et de la région de dent identifiée par les données de texture initiales avec les données dentaires tridimensionnelles initiales dans la région d'ajustement comprend :
l'utilisation d'un procédé de Gauss-Newton pour ajuster les données de nuage de points de modèle facial cibles et la région de dent identifiée par les données de texture initiales avec les données dentaires tridimensionnelles initiales dans la région d'ajustement.

11. Dispositif électronique, comprenant :
un ou plusieurs processeurs ; et
un appareil de stockage, configuré pour stocker au moins un programme,
le ou les programmes, lorsqu'ils sont exécutés par le ou les processeurs, permettant au ou aux processeurs de mettre en œuvre le procédé de suivi dynamique tridimensionnel selon l'une quelconque des revendications 1 à 10.

12. Dispositif électronique selon la revendication 11, le ou les processeurs sont en outre configurés pour :
acquérir des données de nuage de points sources des données dynamiques faciales, des données dentaires tridimensionnelles et des données de modèle facial ;
déterminer un paramètre de rotation, un paramètre de translation et un seuil d'erreur dans un algorithme itératif de point le plus proche ; et
enregistrer, sur la base du paramètre de rotation, du paramètre de translation et du seuil d'erreur, les données de nuage de points sources dans le système de coordonnées prédéfini pour obtenir les données de nuage de points initiales.

13. Dispositif électronique selon la revendication 11, le ou les processeurs sont en outre configurés pour :
utiliser un algorithme de fonction de distance signée tronquée (TSDF) pour acquérir une valeur TSDF et une valeur de pondération correspondant aux données de nuage de points de profondeur initiales ;
utiliser, sur la base de la valeur TSDF et de la valeur de pesée, un algorithme de cubes en marche pour acquérir le plan de contour correspondant aux données de nuage de points de profondeur initiales ; et
déterminer, sur la base des données de nuage de points correspondant au plan de contour, les données de nuage de points de profondeur cible.

14. Dispositif électronique selon la revendication 13, le ou les processeurs sont en outre configurés pour :
établir une zone de délimitation cubique rectangulaire correspondant aux données de nuage de points initiales ;
voxeliser la zone de délimitation cubique rectangulaire correspondant aux données de nuage de points initiales ; et
utiliser l'algorithme TSDF pour calculer la valeur TSDF et la valeur de pondération correspondant aux données de nuage de points de profondeur initiales dans chaque voxelisation.
